# EUROPÄISCHE PATENTSCHRIFT

(11) **EP 3 898 415 B1**
(45) Veröffentlichungstag und Bekanntmachung des Hinweises auf die Patenterteilung: **11.09.2024**
(21) Anmeldenummer: 19835397.1
(22) Anmeldetag: 20.12.2019
(51) Int. Cl.: B64D 11/06

(54) **MONTAGEBAUSATZ FÜR EINEN FLUGZEUGSITZ**
ASSEMBLY KIT FOR AN AIRCRAFT SEAT
KIT DE MONTAGE POUR SIÈGE D'AVION

(30) Priorität: 21.12.2018 DE 102018133538
(43) Veröffentlichungstag der Anmeldung: 27.10.2021
(73) Patentinhaber: Recaro Aircraft Seating GmbH & Co. KG, 74523 Schwäbisch Hall (DE)
(72) Erfinder: REBMANN, Jürgen, 06578 Oldisleben (DE); DRENZECK, Thomas, 74545 Michelfeld (DE)
(74) Vertreter: Daub, Thomas
(86) Internationale Anmeldenummer: PCT/EP2019/086528
(87) Internationale Veröffentlichungsnummer: WO 2020/127872

(56) Entgegenhaltungen:
- EP-A1- 0 336 852
- WO-A2-2010/005678
- DE-A1- 19 724 763
- DE-C2- 19 724 763
- FR-A1- 2 948 326

## Beschreibung

### Stand der Technik

Die Erfindung betrifft einen Montagebausatz nach dem Oberbegriff des Patentanspruchs 1.

Es ist bereits ein Montagebausatz für einen Flugzeugsitz vorgeschlagen worden, mit zumindest einer Aufständereinheit, wenigstens einer mit der Aufständereinheit in einem montierten und flugbereiten Zustand fest gekoppelten Rückenlehne, und mit wenigstens einem Verbindungsmodul, über das die Rückenlehne in dem montierten und flugbereiten Zustand insbesondere starr in einer Position zu der Aufständereinheit ausgerichtet ist.

Die Druckschrift DE 197 24 763 A1 offenbart einen Flugzeugsitz mit einer Aufständereinheit und einer über ein Verbindungsmodul verschwenkbar angebrachten Rückenlehne, wobei der Flugzeugsitz eine Neigungseinstellungseinrichtung mit mehreren Elementen aufweist, mittels denen die Rückenlehne in unterschiedlichen Rückenlehnenstellwinkeln zu der Aufständereinheit fixierbar ist.

Die Druckschrift EP 0336 852 A1 offenbart ebenfalls einen Flugzeugsitz mit einer Aufständereinheit und einer über ein Verbindungsmodul verschwenkbar angebrachten Rückenlehne.

Die Aufgabe der Erfindung besteht insbesondere darin, eine gattungsgemäße Vorrichtung mit verbesserten Eigenschaften hinsichtlich einer neuzulassungsfreien, flexiblen Montage einer Rückenlehne bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einem Montagebausatz für einen Flugzeugsitz, mit zumindest einer Aufständereinheit, wenigstens einer mit der Aufständereinheit in einem montierten und flugbereiten Zustand fest gekoppelten Rückenlehne, und mit wenigstens einem Verbindungsmodul, über das die Rückenlehne in dem montierten und flugbereiten Zustand starr in einer Position zu der Aufständereinheit ausgerichtet ist.

Es wird vorgeschlagen, dass das Verbindungsmodul zumindest zwei Verbindungselemente aufweist, mittels denen die Rückenlehne jeweils in zumindest zwei unterschiedlichen Rückenlehnenstellwinkeln fix zu der Aufständereinheit montierbar ist, wobei die zumindest zwei Verbindungselemente neuzulassungsfrei montierbar sind, wobei unter neuzulassungsfrei verstanden werden soll, dass bei einer Veränderung des Rückenlehnenstellwinkels von +3 Grad oder -3 Grad ausgehend von der Standardposition der Rückenlehne unter Berücksichtigung der Fertigungstoleranz von +1 Grad und -1 Grad bei einem zugelassenen Flugzeugsitz keine erneute Zulassung notwendig ist, wobei mit jedem Verbindungselement ein unterschiedlicher Rückenlehnenstellwinkel bereitgestellt werden kann und die Rückenlehne in dem montierten und flugbereiten Zustand nicht verstellbar ist. Unter einem "montierten und flugbereiten Zustand" soll insbesondere ein Zustand verstanden werden, in dem der Flugzeugsitz für einen Gebrauch, zu dem der Flugzeugsitz vorgesehen ist, einsatzbereit ist. Weiterhin soll unter einem montierten und flugbereiten Zustand insbesondere ein Zustand verstanden werden, in dem alle wesentlichen Bauteile des Flugzeugsitzes, insbesondere die Rückenlehne, ein Sitzboden und zumindest eine Armlehne, korrekt montiert sind, sodass in einem Betrieb des Flugzeugsitzes auftretende Lasten übertragen werden können. Zudem soll unter einem montierten und flugbereiten Zustand insbesondere ein Flugzeugsitz verstanden werden, der nach internationalen Luftfahrtstandards für einen Flugbetrieb mit einer Person zugelassen ist. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einer "Aufständereinheit" soll insbesondere eine Einheit verstanden werden, die dazu vorgesehen ist, einen Flugzeugsitz, insbesondere einen Flugzeugsitz mit zumindest einem Sitzboden und mit zumindest einer Rückenlehne, auf einem Boden, insbesondere auf einem Kabinenboden einer Flugzeugkabine, aufzuständern. insbesondere soll die Aufständereinheit dazu vorgesehen sein, Gewichtskräfte des Flugzeugsitzes und, falls eine Person auf dem Sitz sitzen sollte, Gewichtskräfte der auf dem Flugzeugsitz sitzenden Person und/oder durch einen Transport bedingte, auf die Person wirkende Beschleunigungskräfte auf den Boden zu übertragen. Vorzugsweise weist die Aufständereinheit zumindest eine Kopplungsstelle auf, über die die Rückenlehne in einem unvollständig montierten Zustand schwenkbar mit der Aufständereinheit verbunden ist. Unter einem "Verbindungsmodul" soll insbesondere ein Modul verstanden werden, das dazu vorgesehen ist, die Rückenlehne mit der Aufständereinheit zu verbinden, wobei das Verbindungsmodul insbesondere eine Verbindungsmöglichkeit oder vorzugsweise mehrere Verbindungsmöglichkeiten bereitstellt. Unter einer "Verbindungsmöglichkeit" soll insbesondere eine Möglichkeit zur Verbindung der Rückenlehne mit der Aufständereinheit mittels eines Verbindungselements verstanden werden, wobei jede Verbindungsmöglichkeit eines Verbindungsmoduls einen unterschiedlichen Rückenlehnenstellwinkel ermöglicht. Vorzugsweise weist jedes Verbindungselement genau eine Verbindungsmöglichkeit auf. Besonders bevorzugt ist in einem montierten und flugbereiten Flugzeugsitz für jedes Verbindungsmodul ein Verbindungselement in einer Verbindungsmöglichkeit montiert. Unter "starr" soll insbesondere unbeweglich verstanden werden. Unter einem "Verstellelement" soll insbesondere ein Element verstanden werden, das zu einer Verstellung der Rückenlehne in zumindest zwei Positionen, insbesondere in Positionen mit zumindest zwei unterschiedlichen Rückenlehnenstellwinkeln, vorgesehen ist. Grundsätzlich kann das zumindest eine Verstellelement auch zu einem Toleranzausgleich vorgesehen sein und/oder genutzt werden. Vorzugsweise ist das zumindest eine Verstellelement mit der Rückenlehne gekoppelt. Vorzugsweise ist das zumindest eine Verstellelement mit der Aufständereinheit gekoppelt. Vorzugsweise weist das zumindest eine Verstellelement zumindest eine Führungsbahn auf. Die zumindest eine Führungsbahn weist insbesondere eine runde, eine elliptische oder eine gerade Form auf. Besonders bevorzugt ist das zumindest eine Verstellelement zu einer exzentrischen Verstellung vorgesehen. Alternativ kann das zumindest eine Verstellelement zumindest ein Langloch aufweisen. Das Verstellelement ist insbesondere zu einer Einstellung des Rückenlehnenstellwinkels vorgesehen. Unter einem "Rückenlehnenstellwinkel" soll insbesondere ein Winkel zwischen der Aufständerebene und einer von der Rückenlehne gebildeten Rückenlehnenfläche verstanden werden, wobei die zumindest zwei unterschiedlichen Rückenlehnenstellwinkel im Wesentlichen voneinander differieren. Vorzugsweise ist der Rückenlehnenstellwinkel größer als 90 Grad und kleiner als 180 Grad. Besonders bevorzugt ist der Rückenlehnenstellwinkel von der Rückenlehnenfläche ausgehend nach vorne in Richtung der Aufständerebene ausgebildet. Unter einer "Aufständerebene" soll dabei insbesondere eine Ebene verstanden werden, auf der der Flugzeugsitz aufgeständert ist. Dabei ist die Aufständerebene vorzugsweise von dem Kabinenboden der Flugzeugkabine ausgebildet. Vorzugsweise ist der Rückenlehnenstellwinkel von der Rückenlehnenfläche ausgehend nach vorne in Richtung des Kabinenbodens der Flugzeugkabine ausgebildet. Unter "im Wesentlichen voneinander differieren" soll in diesem Zusammenhang insbesondere verstanden werden, dass die zumindest zwei unterschiedlichen Rückenlehnenstellwinkel eine Winkeldifferenz aufweisen, die insbesondere mehr als plus oder minus 1 Grad beträgt. Eine Fertigungstoleranz beträgt insbesondere genau plus oder minus 1 Grad. Die Winkeldifferenz zwischen den zumindest zwei unterschiedlichen Rückenlehnenstellwinkeln beträgt vorzugsweise höchstens 3 Grad und besonders bevorzugt genau 3 Grad. Die Winkeldifferenz ist insbesondere dazu vorgesehen, zumindest zwei unterschiedliche Positionen der Rückenlehne zu ermöglichen, und insbesondere nicht dazu vorgesehen, lediglich eine Fertigungstoleranz auszugleichen. Die Rückenlehne weist in dem montierten und flugbereiten Zustand insbesondere eine Standardposition, eine Komfortposition oder eine Aufrechtposition auf. Unter einer "Standardposition" soll dabei insbesondere eine normale, aufrechte Stellung der Rückenlehne verstanden werden, wobei ein Rückenlehnenstellwinkel der Standardposition beispielsweise 100 Grad beträgt. Unter einer "Komfortposition" soll insbesondere eine nach hinten geneigte Stellung der Rückenlehne relativ zu der Standardposition verstanden werden, wobei ein Rückenlehnenstellwinkel der Komfortposition insbesondere 3 Grad größer ist als der Rückenlehnenstellwinkel der Standardposition. Unter einer "Aufrechtposition" soll insbesondere eine nach vorne geneigte Stellung der Rückenlehne relativ zu der Standardposition verstanden werden, wobei ein Rückenlehnenstellwinkel der Aufrechtposition insbesondere 3 Grad kleiner ist als der Rückenlehnenstellwinkel der Standardposition. Vorzugsweise weist der Flugzeugsitz eine Sitzrichtung auf. Die Begriffe "hinten" und "vorne" sind insbesondere auf die Sitzrichtung bezogen. In einer aufrechten Stellung des Flugzeugsitzes, in welcher die Rückenlehne zumindest im Wesentlichen senkrecht zu einem Boden ausgerichtet ist, ist die Sitzrichtung parallel zu dem Boden und zumindest im Wesentlichen senkrecht zu der von der Rückenlehne gebildeten Rückenlehnenfläche ausgerichtet. Unter einer "Sitzrichtung" soll dabei insbesondere eine Richtung verstanden werden, welche bei einem ordnungsgemäßen Sitzen eines Passagiers, insbesondere bei parallel ausgerichteten Oberschenkeln des Passagiers, im Wesentlichen der Richtung entspricht, in welcher sich die Oberschenkel des Passagiers vom Gesäß bis zum Kniebereich erstrecken. Die Sitzrichtung entspricht insbesondere einer Flugrichtung. Vorzugsweise ist ein Flugzeugsitz mit einer Rückenlehne in der Komfortposition dazu vorgesehen, in einem Premiumbereich einer Flugzeugkabine angeordnet zu werden. Unter einem "Premiumbereich" soll dabei insbesondere ein Bereich in einer Flugzeugkabine verstanden werden, der dem Passagier einen höheren Komfort, insbesondere mehr Beinfreiheit und einen größeren Living Space, beispielsweise durch einen vergleichsweise hohen Flugzeugsitzabstand, eine vergleichsweise geringe Anzahl an Flugzeugsitzen in dem Bereich, eine Nähe zu einem Notausgang und/oder eine vergleichsweise komfortable Rückenlehneneinstellung bietet. Vorzugsweise ist ein Flugzeugsitz mit einer Rückenlehne in der Aufrechtposition dazu vorgesehen, in einer Notausgangsreihe, vor einer Notausgangsreihe und/oder in einer Reihe vor einem Kabinentrennelement in einer Flugzeugkabine angeordnet zu werden. Unter einem "Kabinentrennelement" soll dabei insbesondere eine Trennwand, eine Toiletteneinheit, eine Kücheneinheit und/oder ein Crew-Rest-Compartment verstanden werden. Unter einem "Verbindungselement" soll insbesondere ein Element verstanden werden, das dazu vorgesehen ist, zumindest die Rückenlehne mit der Aufständereinheit, vorzugsweise direkt, zu verbinden, die Rückenlehne gegen die Aufständereinheit abzustützen und/oder eine Kraftübertragung zwischen der Rückenlehne und der Aufständereinheit zu ermöglichen. Vorzugsweise ist zumindest ein Verbindungselement lastpfadoptimiert ausgebildet. Unter "fix montierbar" soll insbesondere in einer definierten Position nicht verstellbar miteinander verbunden verstanden werden. Zudem soll unter fix montierbar insbesondere verstanden werden, dass die Rückenlehne in dem montierten und flugbereiten Zustand eine Position, insbesondere die Standardposition, die Komfortposition oder die Aufrechtposition, aufweist und, insbesondere durch einen Passagier, nicht in der Position variiert werden kann. Unter "neuzulassungsfrei ausrichtbar" soll insbesondere verstanden werden, dass keine neue Zulassung nach internationalen Luftfahrtstandards notwendig ist, insbesondere wenn der Rückenlehnenstellwinkel, insbesondere durch Verstellung des Rückenlehnenwinkels mittels des Verstellelements verändert wird. Unter "neuzulassungsfrei montierbar" soll insbesondere verstanden werden, dass keine neue Zulassung nach internationalen Luftfahrtstandards notwendig ist, insbesondere wenn der Rückenlehnenstellwinkel, insbesondere durch Verwendung eines anderen Verbindungselements verändert wird. Zudem soll unter neuzulassungsfrei montierbar insbesondere verstanden werden, dass bei einer Verstellung der Rückenlehne zwischen der Standardposition, der Komfortposition und der Aufrechtposition keine neue Zulassung des Flugzeugsitzes notwendig ist. Unter neuzulassungsfrei soll verstanden werden, dass bei einer Veränderung des Rückenlehnenstellwinkels von +3 Grad oder -3 Grad ausgehend von der Standardposition der Rückenlehne unter Berücksichtigung der Fertigungstoleranz von +1 Grad und -1 Grad bei einem zugelassenen Flugzeugsitz keine erneute Zulassung, insbesondere keine erneute HIC-Prüfung (Head Injury Criterion-Prüfung), notwendig ist. Vorzugsweise ist der Flugzeugsitz als ein HIC-zugelassener Flugzeugsitz ausgebildet. Besonders bevorzugt ist der Flugzeugsitz mit der Rückenlehne in der Standardposition zugelassen. Vorzugsweise sind die zumindest zwei Verbindungselemente neuzulassungsfrei montierbar. Vorzugsweise sind die zumindest zwei Verbindungselemente neuzulassungsfrei austauschbar. Durch die erfindungsgemäße Ausgestaltung ist ein Flugzeugsitz mit zumindest zwei unterschiedlichen Rückenlehnenstellwinkeln vorteilhaft montierbar, wobei eine HIC-Prüfung lediglich für einen der zumindest zwei unterschiedlichen Rückenlehnenstellwinkel durchgeführt werden muss. Dadurch ermöglicht der erfindungsgemäße Montagebausatz eine kostenreduzierte Herstellung eines Flugzeugsitzes. Durch die erfindungsgemäße Ausgestaltung wird vorteilhaft ein Montagebausatz für einen Flugzeugsitz mit verbesserten Eigenschaften hinsichtlich einer neuzulassungsfreien, flexiblen Montage einer Rückenlehne bereitgestellt.

Des Weiteren wird vorgeschlagen, dass die zumindest zwei Verbindungselemente einstückig ausgebildet und zumindest in einer ersten Montageposition und einer zweiten Montageposition montierbar sind. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt, wie beispielsweise durch eine Herstellung aus einem Guss und/oder durch eine Herstellung in einem Ein- oder Mehrkomponentenspritzverfahren und vorteilhaft aus einem einzelnen Rohling. Durch diese Ausgestaltung kann eine Bauteilvielfalt vorteilhaft reduziert werden. Dadurch können Fertigungskosten und Lagerungskosten vorteilhaft reduziert werden.

Ferner wird vorgeschlagen, dass die zumindest zwei Verbindungselemente von räumlich trennbaren Elementen gebildet sind. Vorzugsweise sind die zumindest zwei Verbindungselemente von räumlich voneinander trennbaren Elementen gebildet. Unter "räumlich trennbar" soll in diesem Zusammenhang insbesondere verstanden werden, dass die zumindest zwei Verbindungselemente als separate, voneinander unabhängige Bauteile ausgebildet sind und/oder durch eine werkzeuglose Krafteinwirkung voneinander getrennt werden können. Diese Ausgestaltung ermöglicht eine vorteilhafte Montage eines einzelnen Verbindungselements. Montagefehler können durch diese Ausgestaltung vorteilhaft vermieden werden. Dadurch wird das Gewicht des Flugzeugsitzes vorteilhaft gering gehalten.

Zudem wird vorgeschlagen, dass zumindest eines der Verbindungselemente als eine Platte ausgebildet ist. Unter einer "Platte" soll dabei insbesondere ein flächiges Bauteil verstanden werden, das auf zwei gegenüberliegenden Seiten jeweils eine zumindest im Wesentlichen parallele, ebene Fläche ausbildet, wobei eine Dicke der Platte insbesondere höchstens 50 %, vorzugsweise höchstens 20 % und besonders bevorzugt höchstens 10% einer Länge der Platte oder einer Breite der Platte beträgt. Vorzugsweise ist das zumindest eine Verbindungselement aus einem metallischen Werkstoff, insbesondere einem Blech, gebildet. Bevorzugt ist das zumindest eine Verbindungselement aus einem Blech ausgestanzt oder ausgelasert. Grundsätzlich kann das zumindest eine Verbindungselement auch aus einem Faserverbundwerkstoff, wie beispielsweise einem CFK oder einem GFK, gebildet sein. Durch diese Ausgestaltung kann ein vorteilhaft einfach zu fertigendes und kostengünstiges Verbindungselement realisiert werden.

Ferner wird vorgeschlagen, dass das zumindest eine Verstellelement als ein Exzenterverstellelement ausgebildet ist. Unter einem "Exzenterverstellelement" soll insbesondere ein Element verstanden werden, das dazu vorgesehen ist, um eine Drehachse gedreht an einer der Drehachse abgewandten Außenfläche eine Kraft auf ein drittes Element zu bewirken, wobei ein Abstand zwischen der Drehachse und der Außenfläche entlang einer Umfangsrichtung ungleichförmig ist. Das Exzenterverstellelement ist vorzugsweise als eine runde Scheibe ausgebildet, die ein auf der Scheibe exzentrisch angeordnetes Kopplungselement aufweist. Vorzugsweise ist das Exzenterverstellelement drehbar gelagert. Vorzugsweise weist das Exzenterverstellelement eine Drehachse auf. Vorzugsweise ist das Exzenterverstellelement zumindest teilweise in der Rückenlehne angeordnet. Vorzugsweise ist das Exzenterverstellelement mit der Rückenlehne gekoppelt. Alternativ ist es auch denkbar, dass das Exzenterverstellelement zumindest teilweise in der Aufständereinheit angeordnet ist. Das Exzenterverstellelement ist insbesondere zu einer Einstellung des Rückenlehnenstellwinkels vorgesehen. Durch diese Ausgestaltung kann eine vorteilhafte Einstellung des Rückenlehnenstellwinkels vorgenommen werden. Durch die Verwendung des Exzenterverstellelements kann vorteilhaft Bauraum eingespart werden.

Des Weiteren wird vorgeschlagen, dass zumindest eines der Verbindungselemente zumindest zwei Verbindungsstellen aufweist. Unter einer "Verbindungsstelle" soll insbesondere eine Stelle in oder an dem Verbindungselement verstanden werden, die zu einer Kopplung des Verbindungselements mit der Aufständereinheit oder der Rückenlehne vorgesehen ist. Vorzugsweise ist zumindest eine Verbindungsstelle als eine Ausnehmung, vorzugsweise insbesondere als ein Durchgangsloch, ausgebildet. Grundsätzlich kann die zumindest eine Verbindungsstelle auch als eine Erhebung ausgebildet sein. Vorzugsweise ist zumindest eine Verbindungsstelle dazu vorgesehen, mit dem Kopplungselement des Exzenterverstellelements gekoppelt zu werden. Vorzugsweise ist das Exzenterverstellelement dazu vorgesehen, einen Abstand zwischen der Drehachse des Exzenterverstellelements und zumindest einer der Verbindungsstellen zu verändern. Durch diese Ausgestaltung kann eine vorteilhafte Verbindung der Rückenlehne mit der Aufständereinheit erreicht werden.

Ferner wird vorgeschlagen, dass zumindest eines der Verbindungselemente zumindest eine erste Verbindungsstelle, über die das zumindest eine Verbindungselement fest mit der Aufständereinheit koppelbar ist, und zumindest eine zweite Verbindungsstelle aufweist, über die das zumindest eine Verbindungselement fest mit der Rückenlehne koppelbar ist. Vorzugsweise ist zumindest eines der Verbindungselemente mittels eines Verbindungsmittels, beispielsweise eines Bolzens, mit der Aufständereinheit koppelbar. Vorzugsweise ist zumindest eines der Verbindungselemente mittels eines weiteren Verbindungsmittels, beispielsweise eines Bolzens, mit der Rückenlehne koppelbar. Durch diese Ausgestaltung kann eine vorteilhafte Verbindung der Rückenlehne mit der Aufständereinheit erreicht werden.

Zudem wird vorgeschlagen, dass sich ein erster Abstand zwischen einer ersten Verbindungsstelle und einer zweiten Verbindungsstelle eines ersten Verbindungselements von einem zweiten Abstand zwischen einer ersten Verbindungsstelle und einer zweiten Verbindungsstelle eines zumindest zweiten Verbindungselements unterscheidet. Der erste Abstand unterscheidet sich von dem zweiten Abstand insbesondere zumindest um 1%, vorzugsweise zumindest um 5% und besonders bevorzugt zumindest um 10% des zweiten Abstands. Vorzugsweise ist ein unterschiedlicher Abstand dazu vorgesehen, einen unterschiedlichen Rückenlehnenstellwinkel einzustellen. Durch diese Ausgestaltung können mittels zumindest zwei Verbindungselementen vorteilhaft zumindest zwei Rückenlehnenstellwinkel eingestellt werden.

Des Weiteren wird vorgeschlagen, dass zumindest eines der Verbindungselemente zumindest eine Zerstörungsstelle aufweist. Unter einer "Zerstörungsstelle" soll dabei insbesondere eine Stelle in dem Verbindungselement verstanden werden, die so ausgelegt ist, dass das Verbindungselement bei einer definierten Krafteinwirkung vorrangig an dieser Stelle versagt. Vorzugsweise versagt die zumindest eine Zerstörungsstelle in einem Überlastfall. Unter einem "Überlastfall" soll dabei insbesondere ein Crashfall verstanden werden, bei dem ein Passagier in der Sitzrichtung auf die Rückenlehne aufprallt. Durch diese Ausgestaltung ist die Rückenlehne in einem Überlastfall vorteilhaft verschwenkbar ausgebildet. Dadurch wird ein Verletzungsrisiko für einen Passagier vorteilhaft verringert.

Ferner wird vorgeschlagen, dass der Montagebausatz zumindest ein Sicherungselement aufweist, das bei einem Versagen zumindest eines der Verbindungselemente in dem Überlastfall dazu vorgesehen ist, eine Bewegung der Rückenlehne auf eine Maximalverschwenkung zu begrenzen. Unter einem "Sicherungselement" soll dabei insbesondere ein Element verstanden werden, das eine Bewegung der Rückenlehne relativ zu der Aufständereinheit in einem definierten Bereich zulässt und eine Bewegung der Rückenlehne relativ zu der Aufständereinheit über den definierten Bereich hinaus verhindert. Das zumindest eine Sicherungselement ist insbesondere als eine Platte ausgebildet. Vorzugsweise ist das zumindest eine Sicherungselement aus einem metallischen Werkstoff, insbesondere einem Blech, gebildet. Bevorzugt ist das zumindest eine Sicherungselement aus einem Blech ausgestanzt oder ausgelasert. Grundsätzlich kann das zumindest eine Sicherungselement auch aus einem Faserverbundwerkstoff, wie beispielsweise einem CFK oder einem GFK, gebildet sein. Vorzugsweise weist das zumindest eine Sicherungselement eine Führungsnut auf. Die Führungsnut ist insbesondere dazu vorgesehen, ein mit der Aufständereinheit fest verbundenes Verbindungsmittel, insbesondere einen Bolzen, zu führen. Unter einer "Maximalverschwenkung" soll insbesondere eine definierte, maximal verschwenkte Auslenkung der Rückenlehne ausgehend von der Standardposition nach vorne verstanden werden. Vorzugsweise beträgt ein Winkel der Rückenlehne bei der Maximalverschwenkung ausgehend von dem Rückenlehnenstellwinkel in der Standardposition insbesondere weniger als 90 Grad, vorzugsweise weniger als 45 Grad und besonders bevorzugt weniger als 30 Grad. Durch diese Ausgestaltung kann ein vorteilhaft einfach zu fertigendes und kostengünstiges Sicherungselement realisiert werden. Dadurch kann das Sicherungselement vorteilhaft mit zumindest einem Verbindungselement kombiniert werden. Durch diese Ausgestaltung kann in dem Überlastfall eine Verletzung eines Passagiers, insbesondere durch eine nach vorne verschwenkte Rückenlehne, vorteilhaft vermieden werden.

Zudem wird vorgeschlagen, dass das zumindest eine Sicherungselement wenigstens ein Verzögerungselement aufweist, das zumindest dazu vorgesehen ist, eine Bewegungsenergie der Rückenlehne umzuwandeln. Unter einem "Verzögerungselement" soll dabei insbesondere ein Element verstanden werden, das zu einer, insbesondere kontinuierlichen, Reduzierung einer Bewegungsgeschwindigkeit der Rückenlehne in dem Überlastfall, vorzugsweise durch eine Umwandlung einer Bewegungsenergie, insbesondere in eine Verformungsenergie, vorgesehen ist. Das Verzögerungselement ist vorzugsweise in der Führungsnut angeordnet. Vorzugsweise verengt das Verzögerungselement die Führungsnut bis zu der Maximalverschwenkung. Vorzugsweise ist das Verzögerungselement dazu vorgesehen, das Sicherungselement durch eine Bewegungsenergie plastisch zu verformen. Grundsätzlich kann das Verzögerungselement auch als eine Feder ausgebildet sein. Durch diese Ausgestaltung kann die Rückenlehne bis zu einer Maximalverschwenkung vorteilhaft abgebremst werden.

Des Weiteren wird vorgeschlagen, dass der Montagebausatz zumindest ein an der Rückenlehne schwenkbar gelagertes Anbauteil und wenigstens eine Einstelleinheit aufweist, mittels der das zumindest eine Anbauteil in einer Gebrauchsstellung jeweils in zumindest zwei unterschiedlichen Winkeln zu der Rückenlehne ausrichtbar ist. Unter einem "Anbauteil" soll insbesondere eine an der Rückenlehne angebundene Tischeinheit, ein Getränkehalter, ein Bildschirm und/oder ein Ablageelement verstanden werden. Unter einer "Einstelleinheit" soll insbesondere eine Einheit verstanden werden, die dazu vorgesehen ist, einen Winkel des zumindest einen Anbauteils in der Gebrauchsstellung entsprechend dem gewählten Rückenlehnenstellwinkel anzupassen. Vorzugsweise weist die Einstelleinheit zumindest ein Rastelement, zumindest ein weiteres Verstellelement, insbesondere ein weiteres Exzenterverstellelement, und/oder zumindest eine Madenschraube auf. Durch diese Ausgestaltung kann ein Anbauteil vorteilhaft an den Rückenlehnenstellwinkel angepasst werden.

Ferner wird ein Flugzeugsitz, hergestellt mittels eines erfindungsgemäßen Montagebausatzes, vorgeschlagen. Besonders bevorzugt sind die zumindest zwei Verbindungselemente ohne eine Neuzulassung des Flugzeugsitzes montierbar. Vorzugsweise sind die zumindest zwei Verbindungselemente ohne eine Neuzulassung des Flugzeugsitzes austauschbar. Zudem wird ein Verfahren zur Montage eines Flugzeugsitzes mit einem erfindungsgemäßen Montagebausatz vorgeschlagen.

Der erfindungsgemäße Montagebausatz soll hierbei nicht auf die oben beschriebene Anwendung und Ausführungsform beschränkt sein. Insbesondere kann der erfindungsgemäße Montagebausatz zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In der Zeichnung sind fünf Ausführungsbeispiele der Erfindung dargestellt.

Es zeigen:
- Fig. 1: einen erfindungsgemäßen Montagebausatz für einen Flugzeugsitz in einem ersten Ausführungsbeispiel,
- Fig. 2: den erfindungsgemäßen Montagebausatz für den Flugzeugsitz in dem ersten Ausführungsbeispiel in einer Explosionsdarstellung,
- Fig. 3: den erfindungsgemäßen Montagebausatz für den Flugzeugsitz in dem ersten Ausführungsbeispiel,
- Fig. 4: drei Verbindungselemente in dem ersten Ausführungsbeispiel,
- Fig. 5: einen erfindungsgemäßen Montagebausatz für einen Flugzeugsitz in einem zweiten Ausführungsbeispiel,
- Fig. 6: den erfindungsgemäßen Montagebausatz für den Flugzeugsitz in dem zweiten Ausführungsbeispiel in einer Explosionsdarstellung,
- Fig. 7: zwei Verbindungselemente in einem dritten Ausführungsbeispiel,
- Fig. 8: drei Verbindungselemente in einem vierten Ausführungsbeispiel und
- Fig. 9: drei Verbindungselemente in einem fünften Ausführungsbeispiel.

### Beschreibung der Ausführungsbeispiele

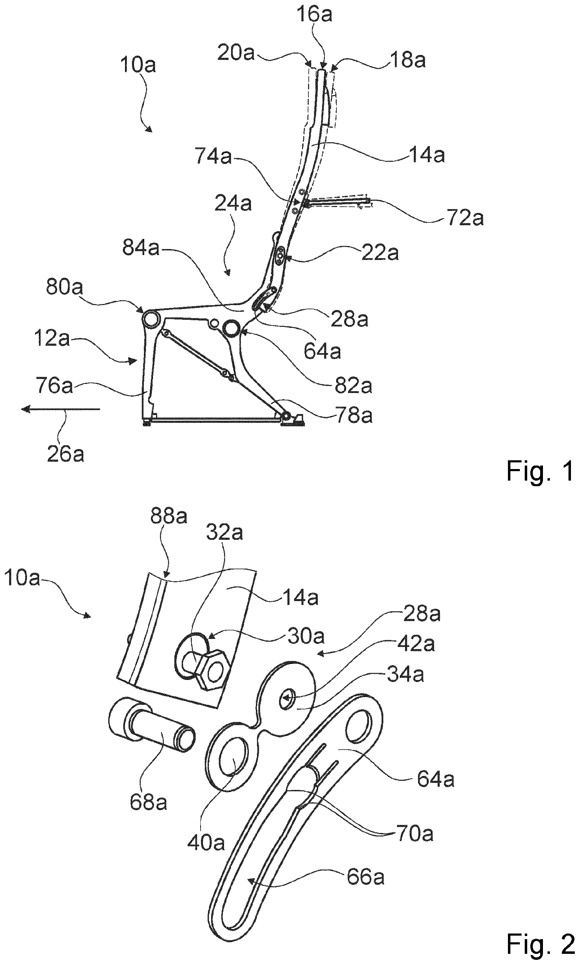

In den Figuren 1 bis 4 ist ein erstes Ausführungsbeispiel eines erfindungsgemäßen Montagebausatzes 10a und eines entsprechenden Flugzeugsitzes 24a gezeigt.

Der Montagebausatz 10a bildet in einem montierten und flugbereiten Zustand den Flugzeugsitz 24a aus (Fig. 1). Der Flugzeugsitz 24a ist mittels des erfindungsgemäßen Montagebausatzes 10a hergestellt. Der Flugzeugsitz 24a weist eine Sitzrichtung 26a auf.

Der Montagebausatz 10a umfasst eine Aufständereinheit 12a. Die Aufständereinheit 12a ist dazu vorgesehen, auf einem nicht näher dargestellten Kabinenboden eines Flugzeugs aufgeständert zu werden. Der Kabinenboden bildet eine Aufständerebene aus. Die Aufständereinheit 12a ist dazu vorgesehen, auf den Flugzeugsitz 24a wirkende Lasten in den Kabinenboden einzuleiten. Die Aufständereinheit 12a weist einen vorderen Sitzfuß 76a auf. Die Aufständereinheit 12a weist einen hinteren Sitzfuß 78a auf. Die Aufständereinheit 12a umfasst einen vorderen Querträger 80a auf. Die Aufständereinheit 12a umfasst einen hinteren Querträger 82a auf. Die Aufständereinheit 12a weist zumindest einen Sitzteiler 84a auf. Der Flugzeugsitz 24a weist einen Sitzteiler 84a und einen weiteren, nicht näher dargestellten Sitzteiler auf. Der Sitzteiler 84a ist in der Sitzrichtung 26a betrachtet an einer linken Seite des Flugzeugsitzes 24a angeordnet. Der weitere, nicht näher dargestellte Sitzteiler ist in der Sitzrichtung 26a betrachtet an einer rechten Seite des Flugzeugsitzes 24a angeordnet. Der Sitzteiler 84a ist im vorliegenden Fall einstückig mit dem vorderen Sitzfuß 78a und dem hinteren Sitzfuß 80a ausgebildet. Der Montagebausatz 10a umfasst eine Rückenlehne 14a. Die Rückenlehne 14a weist eine Bespannung 86a auf. Die Rückenlehne 14a weist einen Keder 88a auf. Die Bespannung 86a ist mittels des Keders 88a formschlüssig mit der Rückenlehne 14a verbunden. Grundsätzlich ist die Bespannung 86a auch mit einer anderen dem Fachmann als sinnvoll erscheinenden Verbindung mit der Rückenlehne 14a verbindbar. Die Rückenlehne 14a bildet eine nicht näher dargestellte Rückenlehnenfläche aus. Die Rückenlehne 14a ist in einem nicht näher dargestellten Rückenlehnenstellwinkel zu der Aufständereinheit 12a ausgerichtet. Die Rückenlehne 14a ist in dem montierten und flugbereiten Zustand nicht verstellbar. Die Rückenlehne 14a weist in dem montierten und flugbereiten Zustand eine Standardposition 16a, eine Komfortposition 18a oder eine Aufrechtposition 20a auf. In dem montierten und flugbereiten Zustand ist die Rückenlehne 14a fest mit der Aufständereinheit 12a gekoppelt. In dem montierten und flugbereiten Zustand ist die Rückenlehne 14a fest mit dem Sitzteiler 84a und dem weiteren, nicht näher dargestellten Sitzteiler gekoppelt. Die Aufständereinheit 12a weist eine Kopplungsstelle 22a auf. Über die Kopplungsstelle 22a ist die Rückenlehne 14a in einem unvollständig montierten Zustand schwenkbar mit der Aufständereinheit 12a verbunden.

Der Montagebausatz 10a umfasst zwei Verbindungsmodule 28a. Ein Verbindungsmodul 28a ist in der Sitzrichtung 26a betrachtet auf einer linken Seite der Rückenlehne 14a angeordnet. Ein nicht näher dargestelltes weiteres Verbindungsmodul ist in der Sitzrichtung 26a betrachtet auf einer rechten Seite der Rückenlehne 14a angeordnet. Das weitere Verbindungsmodul ist insbesondere gespiegelt zu dem Verbindungsmodul 28a ausgebildet. Grundsätzlich ist es auch denkbar, dass der Montagebausatz 10a lediglich ein Verbindungsmodul 28a aufweist.

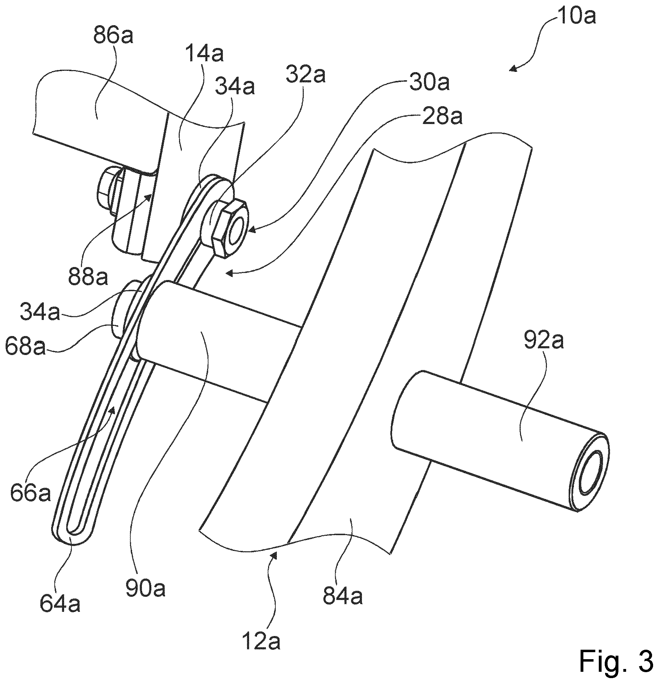

Das Verbindungsmodul 28a weist ein Verstellelement 30a auf. Mittels dem Verstellelement 30a ist die Rückenlehne 14a jeweils in drei unterschiedlichen Rückenlehnenstellwinkeln zu der Aufständereinheit 12a ausrichtbar. Das Verstellelement ist als ein Exzenterverstellelement 30a ausgebildet (Fig. 2 und Fig. 3). Mittels des Verstellelements 30a ist die Rückenlehne 14a jeweils in drei unterschiedlichen Rückenlehnenstellwinkeln zu der Aufständereinheit 12a ausrichtbar. Das Verstellelement30a ist als eine runde Scheibe ausgebildet. Das Verstellelement 30a weist ein zu der Scheibe exzentrisch angeordnetes Kopplungselement 32a auf. Das Kopplungselement 32a ist als ein Bolzen ausgebildet. Das Verstellelement 30a ist drehbar gelagert. Das Verstellelement30a weist eine nicht näher dargestellte Drehachse auf. Das Verstellelement 30a ist teilweise in der Rückenlehne 14a angeordnet. Das Verstellelement 30a ist mit der Rückenlehne 14a gekoppelt. Das Verstellelement 30a ist zu einer Einstellung eines Rückenlehnenstellwinkels vorgesehen.

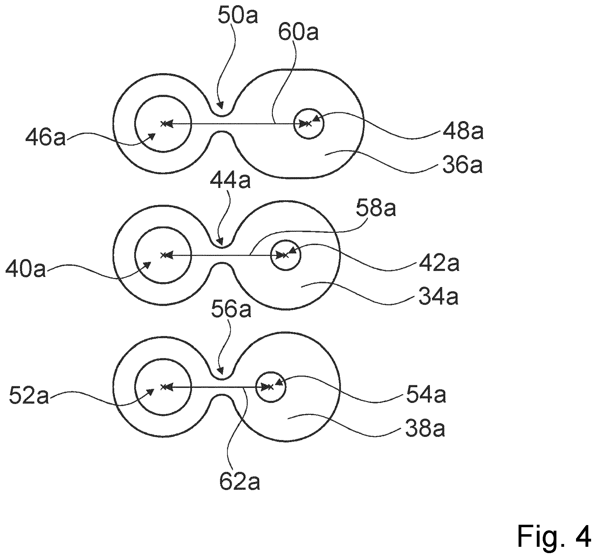

Das Verbindungsmodul 28a weist drei Verbindungselemente 34a, 36a, 38a auf (Fig. 4). Mittels der drei Verbindungselemente 34a, 36a, 38a ist die Rückenlehne 14a jeweils in drei unterschiedlichen Rückenlehnenstellwinkeln fix zu der Aufständereinheit 12a montierbar. Die drei Verbindungselemente 34a, 36a, 38a sind neuzulassungsfrei montierbar. Die drei Verbindungselemente 34a, 36a, 38a sind neuzulassungsfrei austauschbar. Die drei Verbindungselemente 34a, 36a, 38a sind untereinander austauschbar, wobei keine neue Zulassung des Flugzeugsitzes 24a notwendig ist. Die drei Verbindungselemente 34a, 36a, 38a sind von räumlich trennbaren Elementen gebildet. In dem montierten und flugbereiten Flugzeugsitz 24a ist für jedes Verbindungsmodul 28a lediglich ein Verbindungselement 34a, 36a, 38a montiert.

Im vorliegenden Fall kann ein Rückenlehnenstellwinkel mittels dem als Exzenterverstellelement ausgebildeten Verstellelement 30a oder den drei Verbindungselementen 34a, 36a, 38a eingestellt werden. Grundsätzlich ist es auch denkbar, dass das Verbindungsmodul 28a zumindest ein Verstellelement 30a oder zumindest zwei Verbindungselemente 34a, 36a, 38a aufweist.

Das Verbindungsmodul 28a weist das erste Verbindungselement 34a auf (Fig. 4). Das erste Verbindungselement 34a ist als eine Platte ausgebildet. Das erste Verbindungselement 34a ist als ein einzelnes, separates Bauteil ausgebildet. Das erste Verbindungselement 34a ist aus einem metallischen Werkstoff, insbesondere einem Blech, gebildet. Das erste Verbindungselement 34a weist zwei Verbindungsstellen 40a, 42a auf. Das erste Verbindungselement 34a weist eine erste Verbindungsstelle 40a auf, über die das erste Verbindungselement 34a fest mit der Aufständereinheit 12a koppelbar ist. Das erste Verbindungselement 34a weist eine zweite Verbindungsstelle 42a auf, über die das erste Verbindungselement 34a fest mit der Rückenlehne 14a koppelbar ist. Die erste Verbindungsstelle 40a des ersten Verbindungselements 34a ist als ein Durchgangsloch ausgebildet. Die zweite Verbindungsstelle 42a des ersten Verbindungselements 34a ist als ein Durchgangsloch ausgebildet. Das erste Verbindungselement 34a weist eine erste Zerstörungsstelle 44a auf. Die erste Zerstörungsstelle 44a ist als eine Einschnürung ausgebildet. Alternativ kann die Aufständereinheit 12a auch mit der zweiten Verbindungsstelle 42a des ersten Verbindungselements 34a und die Rückenlehne 14a auch mit der ersten Verbindungsstelle 40a des ersten Verbindungselements 34a gekoppelt sein.

Das Verbindungsmodul 28a weist das zweite Verbindungselement 36a auf (Fig. 4). Das zweite Verbindungselement 36a ist als eine Platte ausgebildet. Das zweite Verbindungselement 36a ist als ein einzelnes, separates Bauteil ausgebildet. Das zweite Verbindungselement 36a ist aus einem metallischen Werkstoff, insbesondere einem Blech, gebildet. Das zweite Verbindungselement 36a weist zwei Verbindungsstellen 46a, 48a auf. Das zweite Verbindungselement 36a weist eine erste Verbindungsstelle 46a auf, über die das zweite Verbindungselement 36a fest mit der Aufständereinheit 12a koppelbar ist. Das zweite Verbindungselement 36a weist eine zweite Verbindungsstelle 48a auf, über die das zweite Verbindungselement 36a fest mit der Rückenlehne 14a koppelbar ist. Die erste Verbindungsstelle 46a des zweiten Verbindungselements 36a ist als ein Durchgangsloch ausgebildet. Die zweite Verbindungsstelle 48a des zweiten Verbindungselements 36a ist als ein Durchgangsloch ausgebildet. Das zweite Verbindungselement 36a weist eine zweite Zerstörungsstelle 50a auf. Die zweite Zerstörungsstelle 50a ist als eine Einschnürung ausgebildet. Alternativ kann die Aufständereinheit 12a auch mit der zweiten Verbindungsstelle 48a des zweiten Verbindungselements 36a und die Rückenlehne 14a auch mit der ersten Verbindungsstelle 46a des zweiten Verbindungselements 36a gekoppelt sein.

Das Verbindungsmodul 28a weist das dritte Verbindungselement 38a auf (Fig. 4). Das dritte Verbindungselement 38a ist als eine Platte ausgebildet. Das dritte Verbindungselement 38a ist als ein einzelnes, separates Bauteil ausgebildet. Das dritte Verbindungselement 38a ist aus einem metallischen Werkstoff, insbesondere einem Blech, gebildet. Das dritte Verbindungselement 38a weist zwei Verbindungsstellen 52a, 54a auf. Das dritte Verbindungselement 38a weist eine erste Verbindungsstelle 52a auf, über die das dritte Verbindungselement 38a fest mit der Aufständereinheit 12a koppelbar ist. Das dritte Verbindungselement 38a weist eine zweite Verbindungsstelle 54a auf, über die das dritte Verbindungselement 38a fest mit der Rückenlehne 14a koppelbar ist. Die erste Verbindungsstelle 52a des dritten Verbindungselements 38a ist als ein Durchgangsloch ausgebildet. Die zweite Verbindungsstelle 54a des dritten Verbindungselements 38a ist als ein Durchgangsloch ausgebildet. Das dritte Verbindungselement 38a weist eine dritte Zerstörungsstelle 56a auf. Die dritte Zerstörungsstelle 56a ist als eine Einschnürung ausgebildet. Alternativ kann die Aufständereinheit 12a auch mit der zweiten Verbindungsstelle 52a des dritten Verbindungselements 38a und die Rückenlehne 14a auch mit der ersten Verbindungsstelle 54a des dritten Verbindungselements 38a gekoppelt sein.

Ein erster Abstand 58a zwischen der ersten Verbindungsstelle 40a und der zweiten Verbindungsstelle 42a des ersten Verbindungselements 34a unterscheidet sich von einem zweiten Abstand 60a zwischen der ersten Verbindungsstelle 46a und der zweiten Verbindungsstelle 48a des zweiten Verbindungselements 36a (Fig. 4). Der zweite Abstand 60a zwischen der ersten Verbindungsstelle 46a und der zweiten Verbindungsstelle 48a des zweiten Verbindungselements 36a unterscheidet sich von einem dritten Abstand 62a zwischen der ersten Verbindungsstelle 52a und der zweiten Verbindungsstelle 54a des dritten Verbindungselements 38a. Der dritte Abstand 62a zwischen der ersten Verbindungsstelle 52a und der zweiten Verbindungsstelle 54a des dritten Verbindungselements 38a unterscheidet sich von dem ersten Abstand 58a zwischen der ersten Verbindungsstelle 40a und der zweiten Verbindungsstelle 42a des ersten Verbindungselements 34a. Der erste Abstand 58a, der zweite Abstand 60a und der dritte Abstand 62a sind dazu vorgesehen, drei unterschiedliche Rückenlehnenstellwinkel einzustellen. Der erste Abstand 58a ist dazu vorgesehen, die Standardposition 16a einzustellen. Der zweite Abstand 60a ist dazu vorgesehen, die Komfortposition 18a einzustellen. Der dritte Abstand 62a ist dazu vorgesehen, die Aufrechtposition 20a einzustellen.

Der Montagebausatz 10a weist ein Sicherungselement 64a auf (Fig. 2 und Fig. 3). Das Sicherungselement 64a ist bei einem Versagen zumindest eines der Verbindungselemente 34a, 36a, 38a in einem Überlastfall dazu vorgesehen, eine Bewegung der Rückenlehne 14a auf eine nicht näher dargestellte Maximalverschwenkung zu begrenzen. Das Sicherungselement 64a ist als eine Platte ausgebildet. Das Sicherungselement 64a ist aus einem metallischen Werkstoff, insbesondere einem Blech, gebildet. Das Sicherungselement 64a weist eine Führungsnut 66a auf. Das Verbindungsmodul weist einen Bolzen 68a auf. Die Führungsnut 66a ist dazu vorgesehen, den mit der Aufständereinheit 12a fest verbundenen Bolzen 68a zu führen. Der Sitzteiler 84a umfasst ein Anbindungselement 90a (Fig. 3). Das Anbindungselement 90a ist zu einer Kopplung mit der Rückenlehne 14a vorgesehen. Der Bolzen 68a weist an seinem vorderen Ende ein Gewinde auf (Fig. 2). Der Bolzen 68b ist dazu vorgesehen, in das Anbindungselement 90a eingeschraubt zu werden. Der Sitzteiler 84a umfasst ein weiteres Anbindungselement 92a. Das weitere Anbindungselement 92a ist zu einer Kopplung mit einer weiteren, nicht näher dargestellten Rückenlehne vorgesehen.

Das Sicherungselement 64a weist ein Verzögerungselement 70a auf (Fig. 2). Das Verzögerungselement 70a ist zumindest dazu vorgesehen, eine Bewegungsenergie der Rückenlehne 14a in eine Verformungsenergie umzuwandeln. Das Verzögerungselement 70a ist als eine Verengung der Führungsnut 66a ausgebildet. Das Verzögerungselement 70a ist einstückig mit der Führungsnut 66a ausgebildet. Das Verzögerungselement 70a verengt die Führungsnut 66a bis zu der Maximalverschwenkung. Das Verzögerungselement 70a ist dazu vorgesehen, das Sicherungselement 64a durch eine Bewegungsenergie der Rückenlehne 14a plastisch zu verformen. Bei einer Verschwenkung der Rückenlehne 14a bis zu der Maximalverschwenkung ist der in der Führungsnut 66a geführte Bolzen 68a dazu vorgesehen, das Verzögerungselement 70a auseinanderzudrücken.

Der Montagebausatz 10a weist ein an der Rückenlehne 14a schwenkbar gelagertes Anbauteil 72a auf (Fig. 1). Das Anbauteil 72a ist als eine Tischeinheit ausgebildet. Der Montagebausatz 10a weist eine Einstelleinheit 74a auf. Mittels der Einstelleinheit 74a ist das Anbauteil 72a in einer Gebrauchsstellung jeweils in drei unterschiedlichen Winkeln zu der Rückenlehne 14a ausrichtbar. Die Einstelleinheit 74a umfasst mehrere nicht näher dargestellte Madenschrauben.

Der Flugzeugsitz 24a umfasst in dem montierten und flugbereiten Zustand für jedes Verbindungsmodul 28a genau ein Verbindungselement 34a (Fig. 2 und Fig. 3). Im vorliegenden Fall ist der Flugzeugsitz 24a in der Standardposition 16a montiert. Der Rückenlehnenstellwinkel der Standardposition 16a beträgt im vorliegenden Fall 100 Grad. Die in dem Montagebausatz 10a enthaltenen Verbindungselemente 36a, 38a sind im vorliegenden Fall nicht in dem Flugzeugsitz 24a montiert. Der Flugzeugsitz 24a ist mit dem Verbindungselement 34a zugelassen. Der Flugzeugsitz 24a ist in der Standardposition 16a zugelassen. Mit jedem Verbindungselement 34a, 36a, 38a kann ein unterschiedlicher Rückenlehnenstellwinkel bereitgestellt werden. Das Verbindungselement 36a ist dazu vorgesehen, die Komfortposition 18a einzustellen. Der Rückenlehnenstellwinkel der Komfortposition ist 3 Grad größer als der Rückenlehnenstellwinkel der Standardposition 16a. Das Verbindungselement 38a ist dazu vorgesehen, die Aufrechtposition 20a einzustellen. Der Rückenlehnenstellwinkel der Aufrechtposition 20a ist 3 Grad kleiner als der Rückenlehnenstellwinkel der Standardposition 16a. Die Komfortposition 18a und die Aufrechtposition 20a weisen eine Winkeldifferenz von 6 Grad auf. Durch diese Ausgestaltung kann der Flugzeugsitz 24a mit einer in dem montierten und flugbereiten Zustand nicht verstellbaren Rückenlehne 14a neuzulassungsfrei unterschiedliche Rückenlehnenstellwinkel aufweisen, insbesondere in der Standardposition 16a, der Komfortposition 18a und der Aufrechtposition 20a.

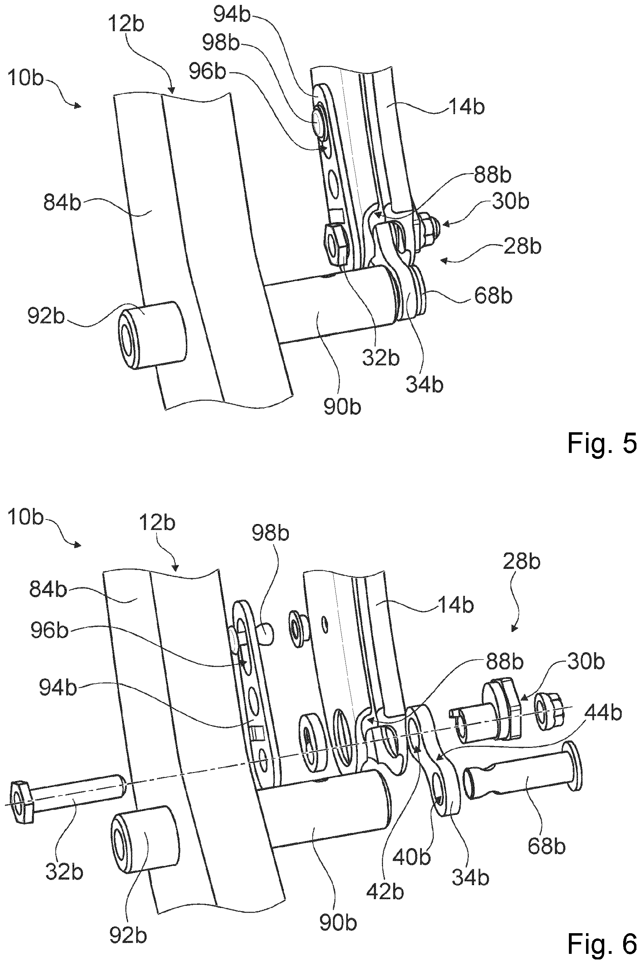

In den Figuren 5 bis 9 sind vier weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 4, verwiesen werden kann. Zur Unterscheidung der Ausführungsbeispiele ist der Buchstabe a den Bezugszeichen des Ausführungsbeispiels in den Figuren 1 bis 4 nachgestellt. In den Ausführungsbeispielen der Figuren 5 bis 9 ist der Buchstabe a durch die Buchstaben b bis e ersetzt.

In den Figuren 5 und 6 ist ein erfindungsgemäßer Montagebausatz in einem zweiten Ausführungsbeispiel gezeigt. Ein Flugzeugsitz ist in den Figuren 5 und 6 nicht näher dargestellt. Grundsätzlich soll hierbei auf die Figur 1 verwiesen werden, die den Montagebausatz 10a und den Flugzeugsitz 24a in dem ersten Ausführungsbeispiel zeigen. Im Vergleich zu dem ersten Ausführungsbeispiel ist lediglich eine Anordnung eines Verbindungsmoduls in dem zweiten Ausführungsbeispiel unterschiedlich. Der Montagebausatz 10b umfasst eine Aufständereinheit 12b. Die Aufständereinheit 12b weist zumindest einen Sitzteiler 84b auf. Der Sitzteiler 84a ist in einer nicht näher dargestellten Sitzrichtung betrachtet an einer rechten Seite des Flugzeugsitzes angeordnet. Der Montagebausatz 10b umfasst eine Rückenlehne 14b. Die Rückenlehne 14b weist einen Keder 88b auf. Die Rückenlehne 14b bildet eine nicht näher dargestellte Rückenlehnenfläche aus. Die Rückenlehne 14b ist in einem nicht näher dargestellten Rückenlehnenstellwinkel zu der Aufständereinheit 12b ausgerichtet. Die Rückenlehne 14b ist in dem montierten und flugbereiten Zustand nicht verstellbar. Die Rückenlehne 14b weist in dem montierten und flugbereiten Zustand eine Standardposition, eine Komfortposition oder eine Aufrechtposition auf. In dem montierten und flugbereiten Zustand ist die Rückenlehne 14b fest mit der Aufständereinheit 12b gekoppelt. In dem montierten und flugbereiten Zustand ist die Rückenlehne 14b fest mit dem Sitzteiler 84b und einem weiteren, nicht näher dargestellten Sitzteiler gekoppelt. Der Montagebausatz 10b umfasst zwei Verbindungsmodule 28b. Ein Verbindungsmodul 28b ist in der Sitzrichtung betrachtet auf einer rechten Seite der Rückenlehne 14b angeordnet. Ein nicht näher dargestelltes weiteres Verbindungsmodul ist in der Sitzrichtung betrachtet auf einer linken Seite der Rückenlehne 14b angeordnet. Das weitere Verbindungsmodul ist insbesondere gespiegelt zu dem Verbindungsmodul 28b ausgebildet.

Das Verbindungsmodul 28b weist ein Verstellelement 30b auf. Mittels dem Verstellelement 30b ist die Rückenlehne 14b jeweils in drei unterschiedlichen Rückenlehnenstellwinkeln zu der Aufständereinheit ausrichtbar. Das Verstellelement 30b ist als ein Exzenterverstellelement ausgebildet (Fig. 5 und Fig. 6). Mittels des Verstellelements 30b ist die Rückenlehne 14b jeweils in drei unterschiedlichen Rückenlehnenstellwinkeln zu der Aufständereinheit 12b ausrichtbar. Das Verstellelement 30b ist als eine runde Scheibe ausgebildet. Das Verstellelement 30b weist ein zu der Scheibe exzentrisch angeordnetes Kopplungselement 32b auf. Das Kopplungselement 32b ist als ein Bolzen ausgebildet. Das Verstellelement 30b ist drehbar gelagert. Das Verstellelement 30b weist eine nicht näher dargestellte Drehachse auf. Das Verstellelement 30b ist teilweise in der Rückenlehne 14b angeordnet. Das Verstellelement 30b ist mit der Rückenlehne 14b gekoppelt. Das Verstellelement 30b ist zu einer Einstellung eines Rückenlehnenstellwinkels vorgesehen. Die Rückenlehne 14b weist ein Abstützelement 94b auf. Das Verstellelement 30b ist mittels des Abstützelements 94b gegen die Rückenlehne 14b abgestützt. Das Abstützelement 94b weist eine Nut 96b auf, welche zu einer Einstellung des Verstellelements 30b vorgesehen ist. Das Abstützelement 94b ist in dem montierten und flugbereiten Zustand mittels eines Niets 98b durch die Nut 96b mit der Rückenlehne 14b fest verbunden.

Das Verbindungsmodul 28b weist drei Verbindungselemente 34b auf, wobei lediglich das erste Verbindungselement 34b in den Figuren 5 und 6 dargestellt ist. Das Verbindungsmodul 28b weist das erste Verbindungselement 34b auf. Das Verbindungsmodul 28b weist zwei weitere, nicht näher dargestellte Verbindungselemente auf. Grundsätzlich können die drei Verbindungselemente 34b den drei Verbindungselementen 34a, 36a, 38a aus dem ersten Ausführungsbeispiel entsprechen. Mittels der drei Verbindungselemente 34b ist die Rückenlehne 14b jeweils in drei unterschiedlichen Rückenlehnenstellwinkeln fix zu der Aufständereinheit 12b montierbar. Die drei Verbindungselemente 34b sind neuzulassungsfrei montierbar. Die drei Verbindungselemente 34b sind neuzulassungsfrei austauschbar. Die drei Verbindungselemente 34b sind untereinander austauschbar, wobei keine neue Zulassung des Flugzeugsitzes notwendig ist. Die drei Verbindungselemente 34b sind von räumlich trennbaren Elementen gebildet. In dem montierten und flugbereiten Flugzeugsitz ist für jedes Verbindungsmodul 28b lediglich ein Verbindungselement 34b montiert. Der Flugzeugsitz umfasst in dem montierten und flugbereiten Zustand für jedes Verbindungsmodul 28b genau ein Verbindungselement 34b. Die in dem Montagebausatz 10b enthaltenen zwei weiteren, nicht näher dargestellten Verbindungselemente sind im vorliegenden Fall nicht in dem Flugzeugsitz montiert.

Im vorliegenden Fall kann ein Rückenlehnenstellwinkel mittels dem Verstellelement 30b oder den drei Verbindungselementen 34b eingestellt werden. Grundsätzlich ist es auch denkbar, dass das Verbindungsmodul 28b zumindest ein Verstellelement 30b oder zumindest zwei Verbindungselemente 34b aufweist.

Das erste Verbindungselement 34b ist als eine Platte ausgebildet. Das erste Verbindungselement 34b ist als ein einzelnes, separates Bauteil ausgebildet. Das erste Verbindungselement 34b ist aus einem metallischen Werkstoff, insbesondere einem Blech, gebildet. Das erste Verbindungselement 34b weist zwei Verbindungsstellen 40b, 42b auf. Das erste Verbindungselement 34b weist eine erste Verbindungsstelle 40b auf, über die das erste Verbindungselement 34b fest mit der Aufständereinheit 12b koppelbar ist. Das erste Verbindungselement 34b weist eine zweite Verbindungsstelle 42b auf, über die das erste Verbindungselement 34b fest mit der Rückenlehne 14b koppelbar ist. Die erste Verbindungsstelle 40b des ersten Verbindungselements 34b ist als ein Durchgangsloch ausgebildet. Die zweite Verbindungsstelle 42b des ersten Verbindungselements 34b ist als ein Durchgangsloch ausgebildet. Das erste Verbindungselement 34b weist eine erste Zerstörungsstelle 44b auf. Die erste Zerstörungsstelle 44b ist als eine Einschnürung ausgebildet. Alternativ kann die Aufständereinheit 12b auch mit der zweiten Verbindungsstelle 42b des ersten Verbindungselements 34b und die Rückenlehne 14b auch mit der ersten Verbindungsstelle 40b des ersten Verbindungselements 34b gekoppelt sein. Das Verbindungselement 34b ist teilweise in einem Rahmen der Rückenlehne 14b angeordnet.

Der Sitzteiler 84b umfasst ein Anbindungselement 90b (Fig. 5 und Fig. 6). Das Anbindungselement 90b ist zu einer Kopplung mit der Rückenlehne 14b vorgesehen. Das Verbindungsmodul weist einen Bolzen 68b auf. Der Bolzen 68b ist dazu vorgesehen, in das Anbindungselement 90b eingeschoben zu werden. Der Bolzen 68b ist in einem montierten und flugbereiten Zustand mit einem nicht näher dargestellten Spannstift gesichert. Grundsätzlich könnte der Bolzen 68b auch in das Anbindungselement 90b eingeschraubt werden. Der Sitzteiler 84b umfasst ein weiteres Anbindungselement 92b. Das weitere Anbindungselement 92b ist zu einer Kopplung mit einer weiteren, nicht näher dargestellten Rückenlehne vorgesehen. Der Montagebausatz 10b weist insbesondere kein Sicherungselement auf.

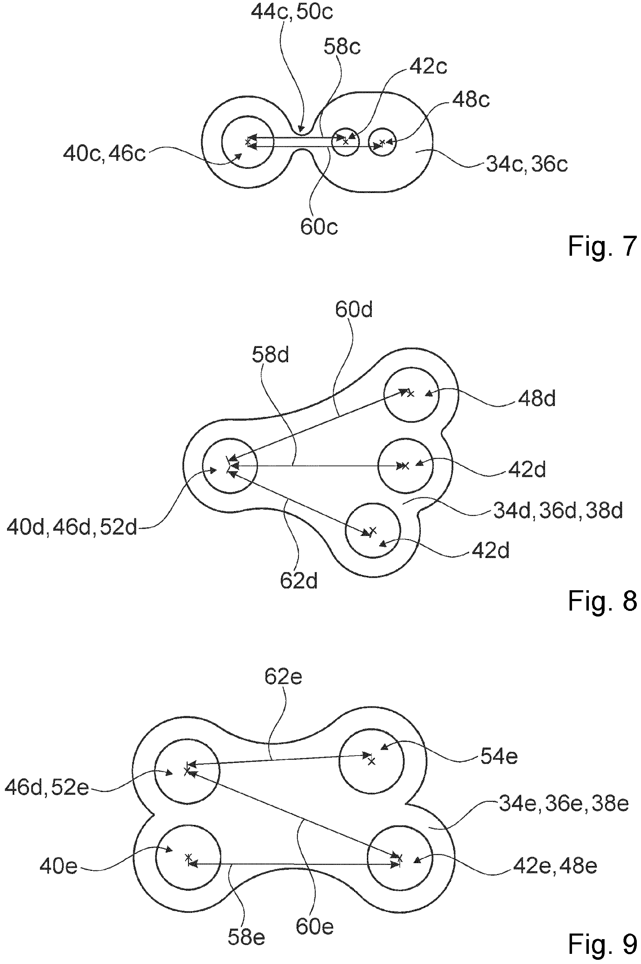

In den Figuren 7 bis 9 ist ein erfindungsgemäßer Montagebausatz lediglich teilweise dargestellt. Ein Flugzeugsitz ist in den Figuren 7 bis 9 nicht näher dargestellt. Grundsätzlich soll hierbei auf die Figuren 1 bis 3 verwiesen werden, die den Montagebausatz 10a und den Flugzeugsitz 24a in dem ersten Ausführungsbeispiel zeigen. Im Unterschied zu dem ersten Ausführungsbeispiel sind lediglich Verbindungselemente in den drei folgenden Ausführungsbeispielen verschieden ausgestaltet. Der Montagebausatz weist zumindest ein teilweise dargestelltes Verbindungsmodul auf. Der Montagebausatz umfasst eine nicht näher dargestellte Aufständereinheit. Der Montagebausatz umfasst eine nicht näher dargestellte Rückenlehne. Die Rückenlehne ist in einem nicht näher dargestellten Rückenlehnenstellwinkel zu der Aufständereinheit ausgerichtet. Die Rückenlehne ist in einem montierten und flugbereiten Zustand nicht verstellbar. Die Rückenlehne weist in dem montierten und flugbereiten Zustand eine Standardposition, eine Komfortposition oder eine Aufrechtposition auf. Der Montagebausatz bildet in dem montierten und flugbereiten Zustand den Flugzeugsitz aus. Der Flugzeugsitz ist mittels des erfindungsgemäßen Montagebausatzes hergestellt.

Die Figur 7 zeigt zwei Verbindungselemente 34c, 36c in einem dritten Ausführungsbeispiel. Das Verbindungsmodul weist das erste Verbindungselement 34c auf. Das Verbindungsmodul weist das zweite Verbindungselement 36c auf. Die zwei Verbindungselemente 34c, 36c sind einstückig als ein einziges Bauteil ausgebildet. Die zwei Verbindungselemente 34c, 36c sind in einer ersten Montageposition und einer zweiten Montageposition montierbar. In dem montierten und flugbereiten Flugzeugsitz sind beide Verbindungselemente 34c, 36c montiert. Die zwei Verbindungselemente 34c, 36c sind als eine Platte ausgebildet. Die zwei Verbindungselemente 34c, 36c sind aus einem metallischen Werkstoff, insbesondere einem Blech, gebildet. Mittels der zwei Verbindungselementen 34c, 36c ist die Rückenlehne jeweils in zwei unterschiedlichen Rückenlehnenstellwinkeln fix zu der Aufständereinheit montierbar. Die zwei Verbindungselemente 34c, 36c sind neuzulassungsfrei montierbar. Die zwei Verbindungselemente 34c, 36c sind neuzulassungsfrei austauschbar. Die zwei Verbindungselemente 34c, 36c sind in zwei unterschiedlichen Montagepositionen montierbar, wobei bei beiden Montagepositionen keine neue Zulassung des Flugzeugsitzes notwendig ist.

Das erste Verbindungselement 34c weist zwei Verbindungsstellen 40c, 42c auf. Das erste Verbindungselement 34c weist eine erste Verbindungsstelle 40c auf, über die das erste Verbindungselement 34c fest mit der Aufständereinheit koppelbar ist. Das erste Verbindungselement 34c weist eine zweite Verbindungsstelle 42c auf, über die das erste Verbindungselement 34c fest mit der Rückenlehne koppelbar ist. Die erste Verbindungsstelle 40c des ersten Verbindungselements 34c ist als ein Durchgangsloch ausgebildet. Die zweite Verbindungsstelle 42c des ersten Verbindungselements 34c ist als ein Durchgangsloch ausgebildet. Das erste Verbindungselement 34c weist eine erste Zerstörungsstelle 44c auf. Die erste Zerstörungsstelle 44c ist als eine Einschnürung ausgebildet.

Das zweite Verbindungselement 36c weist zwei Verbindungsstellen 46c, 48c auf. Das zweite Verbindungselement 36c weist eine erste Verbindungsstelle 46c auf, über die das zweite Verbindungselement 36c fest mit der Aufständereinheit koppelbar ist. Die erste Verbindungsstelle 46c des zweiten Verbindungselements 36c ist als die erste Verbindungsstelle 40c des ersten Verbindungselements 34c ausgebildet. Das zweite Verbindungselement 36c weist eine zweite Verbindungsstelle 48c auf, über die das zweite Verbindungselement 36c fest mit der Rückenlehne koppelbar ist. Die zweite Verbindungsstelle 48c des zweiten Verbindungselements 36c ist als ein Durchgangsloch ausgebildet. Das zweite Verbindungselement 36c weist eine zweite Zerstörungsstelle 50c auf. Die zweite Zerstörungsstelle 50c ist als die erste Zerstörungsstelle 44c ausgebildet.

Ein erster Abstand 58c zwischen der ersten Verbindungsstelle 40c und der zweiten Verbindungsstelle 42c des ersten Verbindungselements 34c unterscheidet sich von einem zweiten Abstand 60c zwischen der ersten Verbindungsstelle 46c und der zweiten Verbindungsstelle 48c des zweiten Verbindungselements 36c. Der erste Abstand 58c und der zweite Abstand 60c sind dazu vorgesehen, zwei unterschiedliche Rückenlehnenstellwinkel einzustellen. Der erste Abstand 58c ist dazu vorgesehen, die Standardposition einzustellen. Der zweite Abstand 60c ist dazu vorgesehen, die Komfortposition einzustellen.

Die Figur 8 zeigt drei Verbindungselemente 34d, 36d, 38d in einem vierten Ausführungsbeispiel. Das Verbindungsmodul weist das erste Verbindungselement 34d auf. Das Verbindungsmodul weist das zweite Verbindungselement 36d auf. Das Verbindungsmodul weist das dritte Verbindungselement 38d auf. Die drei Verbindungselemente 34d, 36d, 38d sind einstückig als ein einziges Bauteil ausgebildet. Die drei Verbindungselemente 34d, 36d, 38d sind in einer ersten Montageposition, in einer zweiten Montageposition und in einer dritten Montageposition montierbar. In dem montierten und flugbereiten Flugzeugsitz sind alle drei Verbindungselemente 34d, 36d, 38d montiert. Die drei Verbindungselemente 34d, 36d, 38d sind als eine Platte ausgebildet. Die drei Verbindungselemente 34d, 36d, 38d sind aus einem metallischen Werkstoff, insbesondere einem Blech, gebildet. Mittels der drei Verbindungselemente 34d, 36d, 38d ist die Rückenlehne jeweils in drei unterschiedlichen Rückenlehnenstellwinkeln fix zu der Aufständereinheit montierbar. Die drei Verbindungselemente 34d, 36d, 38d sind neuzulassungsfrei montierbar. Die drei Verbindungselemente 34d, 36d, 38d sind neuzulassungsfrei austauschbar. Die drei Verbindungselemente 34d, 36d, 38d sind in drei unterschiedlichen Montagepositionen montierbar, wobei bei den Montagepositionen keine neue Zulassung des Flugzeugsitzes notwendig ist.

Das erste Verbindungselement 34d weist zwei Verbindungsstellen 40d, 42d auf. Das erste Verbindungselement 34d weist eine erste Verbindungsstelle 40d auf, über die das erste Verbindungselement 34d fest mit der Aufständereinheit koppelbar ist. Das erste Verbindungselement 34d weist eine zweite Verbindungsstelle 42d auf, über die das erste Verbindungselement 34d fest mit der Rückenlehne koppelbar ist. Die erste Verbindungsstelle 40d des ersten Verbindungselements 34d ist als ein Durchgangsloch ausgebildet. Die zweite Verbindungsstelle 42d des ersten Verbindungselements 34d ist als ein Durchgangsloch ausgebildet.

Das zweite Verbindungselement 36d weist zwei Verbindungsstellen 46d, 48d auf. Das zweite Verbindungselement 36d weist eine erste Verbindungsstelle 46d auf, über die das zweite Verbindungselement 36d fest mit der Aufständereinheit koppelbar ist. Die erste Verbindungsstelle 46d des zweiten Verbindungselements 36d ist als die erste Verbindungsstelle 40d des ersten Verbindungselements 34d ausgebildet. Das zweite Verbindungselement 36d weist eine zweite Verbindungsstelle 48d auf, über die das zweite Verbindungselement 36d fest mit der Rückenlehne koppelbar ist. Die zweite Verbindungsstelle 48d des zweiten Verbindungselements 36d ist als ein Durchgangsloch ausgebildet.

Das dritte Verbindungselement 38d weist zwei Verbindungsstellen 52d, 54d auf. Das dritte Verbindungselement 38d weist eine erste Verbindungsstelle 52d auf, über die das dritte Verbindungselement 38d fest mit der Aufständereinheit koppelbar ist. Die erste Verbindungsstelle 52d des dritten Verbindungselements 38d ist als die erste Verbindungsstelle 40d des ersten Verbindungselements 34d ausgebildet. Das dritte Verbindungselement 38d weist eine zweite Verbindungsstelle 54d auf, über die das dritte Verbindungselement 38d fest mit der Rückenlehne koppelbar ist. Die zweite Verbindungsstelle 54d des dritten Verbindungselements 38d ist als ein Durchgangsloch ausgebildet.

Ein erster Abstand 58d zwischen der ersten Verbindungsstelle 40d und der zweiten Verbindungsstelle 42d des ersten Verbindungselements 34d unterscheidet sich von einem zweiten Abstand 60d zwischen der ersten Verbindungsstelle 46d und der zweiten Verbindungsstelle 48d des zweiten Verbindungselements 36d. Der zweite Abstand 60d zwischen der ersten Verbindungsstelle 46d und der zweiten Verbindungsstelle 48d des zweiten Verbindungselements 36d unterscheidet sich von einem dritten Abstand 62d zwischen der ersten Verbindungsstelle 52d und der zweiten Verbindungsstelle 54d des dritten Verbindungselements 38d. Der dritte Abstand 62d zwischen der ersten Verbindungsstelle 52d und der zweiten Verbindungsstelle 54d des dritten Verbindungselements 38d unterscheidet sich von dem ersten Abstand 58d zwischen der ersten Verbindungsstelle 40d und der zweiten Verbindungsstelle 42d des ersten Verbindungselements 34d. Der erste Abstand 58d, der zweite Abstand 60d und der dritte Abstand 62d sind dazu vorgesehen, drei unterschiedliche Rückenlehnenstellwinkel einzustellen. Der erste Abstand 58d ist dazu vorgesehen, die Standardposition einzustellen. Der zweite Abstand 60d ist dazu vorgesehen, die Komfortposition einzustellen. Der dritte Abstand 62d ist dazu vorgesehen, die Aufrechtposition einzustellen.

Die Figur 9 zeigt drei Verbindungselemente 34e, 36e, 38e in einem fünften Ausführungsbeispiel. Das Verbindungsmodul weist das erste Verbindungselement 34e auf. Das Verbindungsmodul weist das zweite Verbindungselement 36e auf. Das Verbindungsmodul weist das dritte Verbindungselement 38e auf. Die drei Verbindungselemente 34e, 36e, 38e sind einstückig als ein einziges Bauteil ausgebildet. Die drei Verbindungselemente 34e, 36e, 38e sind in einer ersten Montageposition, in einer zweiten Montageposition und in einer dritten Montageposition montierbar. In dem montierten und flugbereiten Flugzeugsitz sind alle drei Verbindungselemente 34e, 36e, 38e montiert. Die drei Verbindungselemente 34e, 36e, 38e sind als eine Platte ausgebildet. Die drei Verbindungselemente 34e, 36e, 38e sind aus einem metallischen Werkstoff, insbesondere einem Blech, gebildet. Mittels den drei Verbindungselementen 34e, 36e, 38e ist die Rückenlehne jeweils in drei unterschiedlichen Rückenlehnenstellwinkeln fix zu der Aufständereinheit montierbar. Die drei Verbindungselemente 34e, 36e, 38e sind neuzulassungsfrei montierbar. Die drei Verbindungselemente 34e, 36e, 38e sind neuzulassungsfrei austauschbar. Die drei Verbindungselemente 34e, 36e, 38e sind in drei unterschiedlichen Montagepositionen montierbar, wobei bei den Montagepositionen keine neue Zulassung des Flugzeugsitzes notwendig ist.

Das erste Verbindungselement 34e weist zwei Verbindungsstellen 40e, 42e auf. Das erste Verbindungselement 34e weist eine erste Verbindungsstelle 40e auf, über die das erste Verbindungselement 34e fest mit der Aufständereinheit koppelbar ist. Das erste Verbindungselement 34e weist eine zweite Verbindungsstelle 42e auf, über die das erste Verbindungselement 34e fest mit der Rückenlehne koppelbar ist. Die erste Verbindungsstelle 40e des ersten Verbindungselements 34e ist als ein Durchgangsloch ausgebildet. Die zweite Verbindungsstelle 42e des ersten Verbindungselements 34e ist als ein Durchgangsloch ausgebildet.

Das zweite Verbindungselement 36e weist zwei Verbindungsstellen 46e, 48e auf. Das zweite Verbindungselement 36e weist eine erste Verbindungsstelle 46e auf, über die das zweite Verbindungselement 36e fest mit der Aufständereinheit koppelbar ist. Die erste Verbindungsstelle 46e des zweiten Verbindungselements 36e ist als ein Durchgangsloch ausgebildet. Das zweite Verbindungselement 36e weist eine zweite Verbindungsstelle 48e auf, über die das zweite Verbindungselement 36e fest mit der Rückenlehne koppelbar ist. Die zweite Verbindungsstelle 48e des zweiten Verbindungselements 36e ist als die zweite Verbindungsstelle 42e des ersten Verbindungselements 34e ausgebildet.

Das dritte Verbindungselement 38e weist zwei Verbindungsstellen 52e, 54e auf. Das dritte Verbindungselement 38e weist eine erste Verbindungsstelle 52e auf, über die das dritte Verbindungselement 38e fest mit der Aufständereinheit koppelbar ist. Die erste Verbindungsstelle 52e des dritten Verbindungselements 38e ist als die erste Verbindungsstelle 46e des zweiten Verbindungselements 36e ausgebildet. Das dritte Verbindungselement 38e weist eine zweite Verbindungsstelle 54e auf, über die das dritte Verbindungselement 38e fest mit der Rückenlehne koppelbar ist. Die zweite Verbindungsstelle 54e des dritten Verbindungselements 38e ist als ein Durchgangsloch ausgebildet.

Ein erster Abstand 58e zwischen der ersten Verbindungsstelle 40e und der zweiten Verbindungsstelle 42e des ersten Verbindungselements 34e unterscheidet sich von einem zweiten Abstand 60e zwischen der ersten Verbindungsstelle 46e und der zweiten Verbindungsstelle 48e des zweiten Verbindungselements 36e. Der zweite Abstand 60e zwischen der ersten Verbindungsstelle 46e und der zweiten Verbindungsstelle 48e des zweiten Verbindungselements 36e unterscheidet sich von einem dritten Abstand 62e zwischen der ersten Verbindungsstelle 52e und der zweiten Verbindungsstelle 54e des dritten Verbindungselements 38e. Der dritte Abstand 62e zwischen der ersten Verbindungsstelle 52e und der zweiten Verbindungsstelle 54e des dritten Verbindungselements 38e unterscheidet sich von dem ersten Abstand 58e zwischen der ersten Verbindungsstelle 40e und der zweiten Verbindungsstelle 42e des ersten Verbindungselements 34e. Der erste Abstand 58e, der zweite Abstand 60e und der dritte Abstand 62e sind dazu vorgesehen, drei unterschiedliche Rückenlehnenstellwinkel einzustellen. Der erste Abstand 58e ist dazu vorgesehen, die Standardposition einzustellen. Der zweite Abstand 60e ist dazu vorgesehen, die Komfortposition einzustellen. Der dritte Abstand 62e ist dazu vorgesehen, die Aufrechtposition einzustellen.

### Bezugszeichen

- 10: Montagebausatz
- 12: Aufständereinheit
- 14: Rückenlehne
- 16: Standardposition
- 18: Komfortposition
- 20: Aufrechtposition
- 22: Kopplungsstelle
- 24: Flugzeugsitz
- 26: Sitzrichtung
- 28: Verbindungsmodul
- 30: Verstellelement
- 32: Kopplungselement
- 34: Verbindungselement
- 36: Verbindungselement
- 38: Verbindungselement
- 40: Verbindungsstelle
- 42: Verbindungsstelle
- 44: Zerstörungsstelle
- 46: Verbindungsstelle
- 48: Verbindungsstelle
- 50: Zerstörungsstelle
- 52: Verbindungsstelle
- 54: Verbindungsstelle
- 56: Zerstörungsstelle
- 58: Abstand
- 60: Abstand
- 62: Abstand
- 64: Sicherungselement
- 66: Führungsnut
- 68: Bolzen
- 70: Verzögerungselement
- 72: Anbauteil
- 74: Einstelleinheit
- 76: Sitzfuß
- 78: Sitzfuß
- 80: Querträger
- 82: Querträger
- 84: Sitzteiler
- 86: Bespannung
- 88: Keder
- 90: Anbindungselement
- 92: Anbindungselement
- 94: Abstützelement
- 96: Nut
- 98: Niet

## Patentansprüche

1. Montagebausatz für einen Flugzeugsitz (24a), mit zumindest einer Aufständereinheit (12a; 12b), wenigstens einer mit der Aufständereinheit (12a; 12b) in einem montierten und flugbereiten Zustand fest gekoppelten Rückenlehne (14a; 14b), und mit wenigstens einem Verbindungsmodul (28a; 28b), über das die Rückenlehne (14a; 14b) in dem montierten und flugbereiten Zustand starr in einer Position zu der Aufständereinheit (12a; 12b) ausgerichtet ist, **dadurch gekennzeichnet, dass** das Verbindungsmodul (28a; 28b) zumindest zwei Verbindungselemente ( 34a, 36a, 38a; 34b; 34c, 36c; 34d, 36d, 38d; 34e, 36e, 38e) aufweist, mittels denen die Rückenlehne (14a)ir zumindest zwei unterschiedlichen Rückenlehnenstellwinkeln fix zu der Aufständereinheit (12a) montierbar ist, wobei die zumindest zwei Verbindungselemente (34a, 36a, 38a; 34b; 34c, 36c; 34d, 36d, 38d; 34e, 36e, 38e) neuzulassungsfrei montierbar sind, wobei unter neuzulassungsfrei verstanden werden soll, dass bei einer Veränderung des Rückenlehnenstellwinkels von +3 Grad oder -3 Grad ausgehend von einer Standardposition der Rückenlehne (14a; 14b) unter Berücksichtigung der Fertigungstoleranz von +1 Grad und -1 Grad bei einem zugelassenen Flugzeugsitz (24a) keine erneute Zulassung notwendig ist, wobei mit jedem Verbindungselement (34a, 36a, 38a; 34b; 34c, 36c; 34d, 36d, 38d; 34e, 36e, 38e) ein unterschiedlicher Rückenlehnenstellwinkel bereitgestellt werden kann und die Rückenlehne (14a; 14b) in dem montierten und flugbereiten Zustand nicht verstellbar ist.

2. Montagebausatz nach Anspruch 1, **dadurch gekennzeichnet, dass** die zumindest zwei Verbindungselemente (34c, 36c; 34d, 36d, 38d; 34e, 36e, 38e) einstückig ausgebildet und zumindest in einer ersten Montageposition und einer zweiten Montageposition montierbar sind.

3. Montagebausatz nach Anspruch 1, **dadurch gekennzeichnet, dass** die zumindest zwei Verbindungselemente (34a, 36a, 38a; 34b) von räumlich trennbaren Elementen gebildet sind.

4. Montagebausatz nach Anspruch 1, **dadurch gekennzeichnet, dass** das Verbindungsmodul (28a; 28b) zumindest ein Verstellelement (30a, 30b) aufweist, mittels dem die Rückenlehne (14a; 14b) jeweils in zumindest zwei unterschiedlichen Rückenlehnenstellwinkeln zu der Aufständereinheit (12a; 12b) neuzulassungsfrei ausrichtbar ist.

5. Montagebausatz nach Anspruch 4, **dadurch gekennzeichnet, dass** das zumindest eine Verstellelement (30a; 30b) als ein Exzenterverstellelement ausgebildet ist.

6. Montagebausatz nach einem der vorhergehenden Ansprüche, **dadurch gekennzeichnet, dass** zumindest eines der Verbindungselemente (34a, 36a, 38a; 34b; 34c, 36c; 34d, 36d, 38d; 34e, 36e, 38e) als eine Platte ausgebildet ist.

7. Montagebausatz nach einem der vorhergehenden Ansprüche, **dadurch gekennzeichnet, dass** zumindest eines der Verbindungselemente (34a, 36a, 38a; 34b; 34c, 36c; 34d, 36d, 38d; 34e, 36e, 38e) zumindest zwei Verbindungsstellen (40a, 42a, 46a, 48a, 52a, 54a; 40b, 42b; 40c, 42c, 46c, 48c; 40d, 42d, 46d, 48d, 52d, 54d; 40e, 42e, 46e, 48e, 52e, 54e) aufweist.

8. Montagebausatz zumindest nach Anspruch 7, **dadurch gekennzeichnet, dass** zumindest eines der Verbindungselemente (34a, 36a, 38a; 34b; 34c, 36c; 34d, 36d, 38d; 34e, 36e, 38e) zumindest eine erste Verbindungsstelle (40a, 46a, 52a; 40b; 40c, 46c; 40d, 46d, 52d; 40e, 46e, 52e), über die das zumindest eine Verbindungselement (34a, 36a, 38a; 34b; 34c, 36c; 34d, 36d, 38d; 34e, 36e, 38e) fest mit der Aufständereinheit (12a; 12b) koppelbar ist, und zumindest eine zweite Verbindungsstelle (42a, 48a, 54a; 42b; 42c, 48c; 42d, 48d, 54d; 42e, 48e, 54e) aufweist, über die das zumindest eine Verbindungselement (34a, 36a, 38a; 34b; 34c, 36c; 34d, 36d, 38d; 34e, 36e, 38e) fest mit der Rückenlehne (14a; 14b) koppelbar ist.

9. Montagebausatz zumindest nach Anspruch 8, **dadurch gekennzeichnet, dass** sich ein erster Abstand (58a; 58c; 58d; 58e) zwischen einer ersten Verbindungsstelle (40a; 40b; 40c; 40d; 40e) und einer zweiten Verbindungsstelle (42a; 42b; 42c; 42d; 42e) eines ersten Verbindungselements (34a; 34b; 34c; 34d; 34e) von einem zweiten Abstand (60a; 60c; 60d; 60e) zwischen einer ersten Verbindungsstelle (46a; 46c; 46d; 46e) und einer zweiten Verbindungsstelle (48a; 48c; 48d; 48e) eines zumindest zweiten Verbindungselements (36a; 36c; 36d; 36e) unterscheidet.

10. Montagebausatz nach einem der vorhergehenden Ansprüche, **dadurch gekennzeichnet, dass** zumindest eines der Verbindungselemente (34a, 36a, 38a; 34b; 34c, 36c; 34d, 36d, 38d; 34e, 36e, 38e) zumindest eine Zerstörungsstelle (44a, 50a, 56a; 44b; 44c, 50c) aufweist.

11. Montagebausatz nach einem der vorhergehenden Ansprüche, **gekennzeichnet durch** zumindest ein Sicherungselement (64a), das bei einem Versagen zumindest eines der Verbindungselemente (34a, 36a, 38a) in einem Überlastfall dazu vorgesehen ist, eine Bewegung der Rückenlehne (14a) auf eine Maximalverschwenkung zu begrenzen.

12. Montagebausatz zumindest nach Anspruch 11, **dadurch gekennzeichnet, dass** das zumindest eine Sicherungselement (64a) wenigstens ein Verzögerungselement (70a) aufweist, das zumindest dazu vorgesehen ist, eine Bewegungsenergie der Rückenlehne (14a) umzuwandeln.

13. Montagebausatz nach einem der vorhergehenden Ansprüche, **gekennzeichnet durch** zumindest ein an der Rückenlehne (14a) schwenkbar gelagertes Anbauteil (72a) und wenigstens eine Einstelleinheit (74a), mittels der das zumindest eine Anbauteil (72a) in einer Gebrauchsstellung jeweils in zumindest zwei unterschiedlichen Winkeln zu der Rückenlehne (14a) ausrichtbar ist.

14. Flugzeugsitz (24a), hergestellt mittels eines Montagebausatzes nach einem der vorhergehenden Ansprüche.

15. Verfahren zur Montage eines Flugzeugsitzes (24a) mit einem Montagebausatz nach einem der vorhergehenden Ansprüche 1 bis 13.

## Claims

1. Assembly kit for an aircraft seat (24a),
with at least one mounting unit (12a; 12b),
with at least one backrest (14a; 14b) which is fixedly coupled with the mounting unit (12a; 12b) in a state when assembled and ready for flight,
and with at least one connection module (28a; 28b), via which the backrest (14a; 14b) is oriented rigidly in a position relative to the mounting unit (12a; 12b) in the assembled and ready-for-flight state,
**characterized in that** the connection module (28a; 28b) comprises at least two connection elements (34a, 36a, 38a; 34b; 34c, 36c; 34d, 36d, 38d; 34e, 36e, 38e), by means of which the backrest (14a) can be fixedly mounted in at least two different backrest adjustment angles relative to the mounting unit (12a), the at least two connection elements (34a, 36a, 38a; 34b; 34c, 36c; 34d, 36d, 38d; 34e, 36e, 38e) being mountable without requiring new approval, wherein "without requiring new approval" is to mean that no new approval is necessary for an approved aircraft seat (24a) if the backrest adjustment angle is changed by +3 degrees or -3 degrees with respect to the standard position of the backrest (14a; 14b), taking the manufacturing tolerance of +1 degree and -1 degree into account,
wherein by means of each connection element (34a, 36a, 38a; 34b; 34c, 36c; 34d, 36d, 38d; 34e, 36e, 38e) a different backrest adjustment angle can be provided and the backrest (14a; 14b) cannot be adjusted in the assembled and ready-to-flight state.

2. Assembly kit according to claim 1,
**characterized in that** the at least two connection elements (34c, 36c; 34d, 36d, 38d; 34e, 36e, 38e) are implemented integrally and are mountable at least in a first mounting position and a second mounting position.

3. Assembly kit according to claim 1,
**characterized in that** the at least two connection elements (34a, 36a, 38a; 34b) are implemented by spatially separable elements.

4. Assembly kit according to claim 1,
**characterized in that** the connection module (28a; 28b) comprises at least one adjusting element (30a; 30b), by means of which the backrest (14a; 14b) is orientable respectively in at least two different backrest adjustment angles relative to the mounting unit (12a; 12b) without requiring new approval.

5. Assembly kit according to claim 4,
**characterized in that** the at least one adjusting element (30a; 30b) is implemented as an eccentric adjusting element.

6. Assembly kit according to one of the preceding claims,
**characterized in that** at least one of the connection elements (34a, 36a, 38a; 34b; 34c, 36c; 34d, 36d, 38d; 34e, 36e, 38e) is realized as a plate.

7. Assembly kit according to one of the preceding claims,
**characterized in that** at least one of the connection elements (34a, 36a, 38a; 34b; 34c, 36c; 34d, 36d, 38d; 34e, 36e, 38e) has at least two connection points (40a, 42a, 46a, 48a, 52a, 54a; 40b, 42b; 40c, 42c, 46c, 48c; 40d, 42d, 46d, 48d, 52d, 54d; 40e, 42e, 46e, 48e, 52e, 54e).

8. Assembly kit at least according to claim 7,
**characterized in that** at least one of the connection elements (34a, 36a, 38a; 34b; 34c, 36c; 34d, 36d, 38d; 34e, 36e, 38e) comprises at least one first connection point (40a, 46a, 52a; 40b; 40c, 46c; 40d, 46d, 52d; 40e, 46e, 52e), via which the at least one connection element (34a, 36a, 38a; 34b; 34c, 36c; 34d, 36d, 38d; 34e, 36e, 38e) is fixedly couplable with the mounting unit (12a; 12b), and comprises at least one second connection point (42a, 48a, 54a; 42b; 42c, 48c; 42d, 48d, 54d; 42e, 48e, 54e), via which the at least one connection element (34a, 36a, 38a; 34b; 34c, 36c; 34d, 36d, 38d; 34e, 36e, 38e) is fixedly couplable with the backrest (14a; 14b).

9. Assembly kit at least according to claim 8,
**characterized in that** a first distance (58a; 58c; 58d; 58e) between a first connection point (40a; 40b; 40c; 40d; 40e) and a second connection point (42a; 42b; 42c; 42d; 42e) of a first connection element (34a; 34b; 34c; 34d; 34e) differs from a second distance (60a; 60c; 60d; 60e) between a first connection point (46a; 46c; 46d; 46e) and a second connection point (48a; 48c; 48d; 48e) of an at least second connection element (36a; 36c; 36d; 36e).

10. Assembly kit according to one of the preceding claims,
**characterized in that** at least one of the connection elements (34a, 36a, 38a; 34b; 34c, 36c; 34d, 36d, 38d; 34e, 36e, 38e) comprises at least one destruction point (44a, 50a, 56a; 44b; 44c, 50c).

11. Assembly kit according to one of the preceding claims,
**characterized by** at least one securing element (64a), which is configured, in case of a failure of at least one of the connection elements (34a, 36a, 38a) in an overload case, to delimit a movement of the backrest (14a) to a maximum pivot.

12. Assembly kit at least according to claim 11,
**characterized in that** the at least one securing element (64a) comprises at least one delay element (70a), which is at least configured to convert a movement energy of the backrest (14a).

13. Assembly kit according to one of the preceding claims,
**characterized by** at least one attachment component (72a), which is supported pivotably on the backrest (14a), and by at least one adjusting unit (74a), via which the at least one attachment component (72a) is respectively orientable in at least two different angles with respect to the backrest (14a) in a usage position.

14. Aircraft seat (24a), produced by means of an assembly kit according to one of the preceding claims.

15. Method for the assembly of an aircraft seat (24a) with an assembly kit according to one of the preceding claims 1 to 13.

## Revendications

1. Kit de montage pour un siège d'avion (24a),
avec au moins une unité de montant (12a ; 12b),
avec au moins un dossier (14a ; 14b) couplé fixement à l'unité de montant (12a ; 12b) en état monté et prêt à voler,
et avec au moins un module de raccordement (28a ; 28b), par le biais duquel le dossier (14a ; 14b) est orienté rigidement dans une position par rapport à l'unité de montant (12a ; 12b) en état monté et prêt à voler,
**caractérisé en ce que** le module de raccordement (28a ; 28b) présente au moins deux éléments de raccordement (34a, 36a, 38a ; 34b ; 34c, 36c ; 34d, 36d, 38d ; 34e, 36e, 38e) moyennant lesquels le dossier (14a) peut être monté dans au moins deux angles-réglage de dossier différents fixement par rapport à l'unité de montant (12a), où les au moins deux éléments de raccordement (34a, 36a, 38a ; 34b ; 34c, 36c ; 34d, 36d, 38d ; 34e, 36e, 38e) peuvent être montés sans nouvelle autorisation, le terme « sans nouvelle autorisation » devant signifier que lors d'une modification de l'angle-réglage de dossier par +3 degrés ou -3 degrés à partir d'une position standard du dossier (14a ; 14b), en considération de la tolérance de fabrication de +1 degré et de -1 degré, aucune nouvelle autorisation n'est nécessaire pour un siège d'avion (24a) autorisé,
où un angle de réglage de dossier différent peut être pourvu avec chaque élément de raccordement (34a, 36a, 38a ; 34b ; 34c, 36c ; 34d, 36d, 38d ; 34e, 36e, 38e) et le dossier (14a ; 14b) n'est pas réglable en état monté et prêt à voler.

2. Kit de montage selon la revendication 1,
**caractérisé en ce que** les au moins deux éléments de raccordement (34c, 36c ; 34d, 36d, 38d ; 34e, 36e, 38e) sont réalisés intégralement et peuvent être montés au moins dans une première position de montage et une deuxième position de montage.

3. Kit de montage selon la revendication 1,
**caractérisé en ce que** les au moins deux éléments de raccordement (34a, 36a, 38a ; 34b) sont formés par des éléments séparables dans l'espace.

4. Kit de montage selon la revendication 1,
**caractérisé en ce que** le module de raccordement (28a ; 28b) comprend au moins un élément de réglage (30a, 30b), par le biais duquel le dossier (14a ; 14b) peut sans nouvelle autorisation être orienté respectivement dans au moins deux angles-réglage de dossier différents par rapport à l'unité de montant (12a ; 12b).

5. Kit de montage selon la revendication 4,
**caractérisé en ce que** l'au moins un élément de réglage (30a ; 30b) est réalisé sous forme d'élément de réglage excentrique.

6. Kit de montage selon l'une des revendications précédentes, **caractérisé en ce qu'**au moins l'un des éléments de raccordement (34a, 36a, 38a ; 34b ; 34c, 36c ; 34d, 36d, 38d ; 34e, 36e, 38e) est réalisé sous forme de plaque.

7. Kit de montage selon l'une des revendications précédentes, **caractérisé en ce qu'**au moins l'un des éléments de raccordement (34a, 36a, 38a ; 34b ; 34c, 36c ; 34d, 36d, 38d ; 34e, 36e, 38e) présente au moins deux points de raccordement (40a, 42a, 46a, 48a, 52a, 54a ; 40b, 42b ; 40c, 42c, 46c, 48c ; 40d, 42d, 46d, 48d, 52d, 54d ; 40e, 42e, 46e, 48e, 52e, 54e).

8. Kit de montage au moins selon la revendication 7,
**caractérisé en ce qu'**au moins l'un des éléments de raccordement (34a, 36a, 38a ; 34b ; 34c, 36c ; 34d, 36d, 38d ; 34e, 36e, 38e) présente au moins un premier point de raccordement (40a, 46a, 52a ; 40b ; 40c, 46c ; 40d, 46d, 52d ; 40e, 46e, 52e), par le biais duquel l'au moins un élément de raccordement (34a, 36a, 38a ; 34b ; 34c, 36c ; 34d, 36d, 38d ; 34e, 36e, 38e) peut être couplé fixement à l'unité de montant (12a ; 12b), et présente au moins un deuxième point de raccordement (42a, 48a, 54a ; 42b ; 42c, 48c ; 42d, 48d, 54d ; 42e, 48e, 54e), par le biais duquel l'au moins un élément de raccordement (34a, 36a, 38a ; 34b ; 34c, 36c ; 34d, 36d, 38d ; 34e, 36e, 38e) peut être couplé fixement au dossier (14a ; 14b).

9. Kit de montage au moins selon la revendication 8,
**caractérisé en ce qu'**une première distance (58a ; 58c ; 58d ; 58e) entre un premier point de raccordement (40a ; 40b ; 40c ; 40d ; 40e) et un deuxième point de raccordement (42a ; 42b ; 42c ; 42d ; 42e) d'un premier élément de raccordement (34a ; 34b ; 34c ; 34d ; 34e) diffère d'une deuxième distance (60a ; 60c ; 60d ; 60e) entre un premier point de raccordement (46a ; 46c ; 46d ; 46e) et un deuxième point de raccordement (48a ; 48c ; 48d ; 48e) d'un au moins deuxième élément de raccordement (36a ; 36c ; 36d ; 36e).

10. Kit de montage selon l'une des revendications précédentes, **caractérisé en ce qu'**au moins l'un des éléments de raccordement (34a, 36a, 38a ; 34b ; 34c, 36c ; 34d, 36d, 38d ; 34e, 36e, 38e) présente au moins un point de destruction (44a, 50a, 56a ; 44b ; 44c, 50c).

11. Kit de montage selon l'une des revendications précédentes, **caractérisé par** au moins un élément de sécurité (64a) qui est conçu, en cas de défaillance d'au moins un des éléments de raccordement (34a, 36a, 38a) en cas de surcharge, pour limiter un mouvement du dossier (14a) à un pivotement maximal.

12. Kit de montage au moins selon la revendication 11,
**caractérisé en ce que** l'au moins un élément de sécurisation (64a) comprend au moins un élément de ralentissement (70a) qui est au moins prévu pour convertir une énergie de mouvement du dossier (14a).

13. Kit de montage selon l'une des revendications précédentes,
**caractérisé par** au moins une pièce rapportée (72a) supportée de manière pivotable sur le dossier (14a) et au moins une unité de réglage (74a) par le biais de laquelle l'au moins une pièce rapportée (72a) peut dans une position d'utilisation être orientée respectivement dans au moins deux angles différents par rapport au dossier (14a).

14. Siège d'avion (24a) fabriqué au moyen d'un kit de montage selon l'une des revendications précédentes.

15. Procédé de montage d'un siège d'avion (24a) avec un kit de montage selon l'une des revendications précédentes 1 à 13.
